# EUROPÄISCHE PATENTANMELDUNG

(11) **EP 4 601 157 A1**
(43) Veröffentlichungstag der Anmeldung: **13.08.2025**
(21) Anmeldenummer: 24156768.4
(22) Anmeldetag: 09.02.2024
(51) Int. Cl.: H02J 7/02, H02J 7/06

(54) **ADAPTER FÜR EINE MEHRFACHLADEVORRICHTUNG**

(71) Anmelder: Hilti Aktiengesellschaft, 9494 Schaan (LI)
(72) Erfinder: Zagler, Andreas, 88045 Friedrichshafen (DE); Kerler, Johannes, 86877 Walkertshofen (DE); Guggemos, Johannes, 85055 Ingolstadt (DE)
(74) Vertreter: Hilti Aktiengesellschaft Corporate Intellectual Property

(57) **Zusammenfassung**

Ladevorrichtung, insbesondere zum Versorgen wenigstens einer ersten und zweiten Energiespeichereinheit mit elektrischer Energie, enthaltend eine Netzstromanbindung zur Verbindung mit einer Netzstromquelle sowie eine Steuervorrichtung.

Die Ladevorrichtung enthält einen Gleichrichter, einen Leistungsfaktorkorrekturfilter, eine Voreinstellungsvorrichtung mit einen isolierten Gleichspannungswandler und Kondensator zum Erzeugen einer isolierten Zwischenkreisspannung, wobei die Voreinstellungsvorrichtung wenigstens eine erste und zweite Schnittstelle enthält, sowie wenigstens eine erste und zweite Adaptervorrichtung, wobei jede Adaptervorrichtung eine Adapterschnittstelle enthält zum Verbinden mit der wenigstens ersten oder zweiten Schnittstelle der Voreinstellungsvorrichtung, und wobei jede Adaptervorrichtung eine Feinregulierungsvorrichtung mit einer Schnittstelleneinrichtung zum Verbinden mit einer Energiespeichereinheit enthält, und wobei jede Feinregulierungsvorrichtung einen geregelten und unisolierten Gleichspannungswandler enthält, sodass ein Leistungswert an der ersten und/oder zweiten Schnittstelleneinrichtung bereitstellbar ist, und wobei der Leistungswert an der ersten und/oder zweiten Schnittstelleneinrichtung wenigstens einem Anteil einer Gesamtleistung entspricht.

## Beschreibung

Die vorliegende Erfindung betrifft eine Ladevorrichtung, insbesondere zum Versorgen wenigstens einer ersten und zweiten Energiespeichereinheit mit elektrischer Energie, enthaltend eine Netzstromanbindung zur Verbindung mit einer Netzstromquelle sowie eine Steuervorrichtung.

Darüber hinaus betrifft die vorliegende Erfindung ein Verfahren zum Steuern und Regeln eines Systems enthaltend eine Ladevorrichtung und wenigstens eine erste und zweite Adaptervorrichtung zum jeweiligen Verbinden mit einer Energiespeichereinheit, wobei die Ladevorrichtung eine Netzstromanbindung zur Verbindung mit einer Netzstromquelle sowie eine Steuervorrichtung enthält, und wobei die wenigstens erster und zweiter Energiespeichereinheit jeweils einen Transceiver zum Senden und Empfangen von Signalen enthält.

Aus dem Stand der Technik sind Ladevorrichtungen (auch Lader, Ladegerät oder Charger genannt) zum Laden von Akkumulatoren oder anderen Energiespeichereinheiten weitestgehend bekannt. Die Akkumulatoren und Energiespeichereinheiten können dabei beispielsweise zur Versorgung von Werkzeugmaschinen (d.h. Bohrmaschinen, Bohrhammer, Sägen, Schleifgeräte, Lampen oder dergleichen) verwendet werden. Derartige Ladevorrichtungen verfügen dabei über eine oder mehrere Schnittstelleneinrichtungen, durch welche Akkumulatoren oder anderen Energiespeichereinheiten mit der Ladevorrichtung verbunden und mit elektrischer Energie versorgt werden können.

Die zum Stand der Technik gehörenden Ladevorrichtungen sind oftmals zu aufwendig bzw. komplex und dadurch zu kostspielig konzipiert.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 8. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Ladevorrichtung, insbesondere zum Versorgen wenigstens einer ersten und zweiten Energiespeichereinheit mit elektrischer Energie, enthaltend eine Netzstromanbindung zur Verbindung mit einer Netzstromquelle sowie eine Steuervorrichtung.

### Erfindungsgemäß enthält die Ladevorrichtung

- einen Gleichrichter;
- einen Leistungsfaktorkorrekturfilter;
- eine Voreinstellungsvorrichtung mit einen isolierten Gleichspannungswandler und Kondensator zum Erzeugen einer isolierten Zwischenkreisspannung, wobei die Voreinstellungsvorrichtung wenigstens eine erste und zweite Schnittstelle enthält, sowie
- wenigstens eine erste und zweite Adaptervorrichtung, wobei jede Adaptervorrichtung eine Adapterschnittstelle enthält zum Verbinden mit der wenigstens ersten oder zweiten Schnittstelle der Voreinstellungsvorrichtung, und wobei jede Adaptervorrichtung eine Feinregulierungsvorrichtung mit einer Schnittstelleneinrichtung zum Verbinden mit einer Energiespeichereinheit enthält, und wobei jede Feinregulierungsvorrichtung einen geregelten und unisolierten Gleichspannungswandler enthält, sodass ein Leistungswert an der ersten und/oder zweiten Schnittstelleneinrichtung bereitstellbar ist, und wobei der Leistungswert an der ersten und/oder zweiten Schnittstelleneinrichtung wenigstens einem Anteil einer Gesamtleistung entspricht.

Der Leistungsfaktorkorrekturfilter kann auch als Power Factor Correction-Filter (= PFC-Filter) bezeichnet werden.

Die Verbindung einer Adapterschnittstelle einer Adaptervorrichtung mit einer Schnittstelle der Voreinstellungsvorrichtung kann dabei wiederlösbar oder unlösbar (d.h. fest) ausgestaltet sein.

Der Kondensator kann dabei auch als Zwischenkreiskondensator bezeichnet werden.

Entsprechend einer weiteren alternativen Ausführungsform kann es möglich sein, dass jede Adaptervorrichtung wenigstens einen Transceiver enthält, sodass wenigstens ein Signal von der Adaptervorrichtung an die Steuervorrichtung gesendet werden kann zum Einstellen eines Spannungswertes an einer Schnittstelleneinrichtung.

Gemäß einer weiteren alternativen Ausführungsform kann es möglich sein, dass die Voreinstellungsvorrichtung wenigstens einen Filter enthält. Der Filter kann als Leistungsfaktorkorrekturfilter ausgestaltet sein.

Entsprechend einer weiteren alternativen Ausführungsform kann es möglich sein, dass der Leistungsfaktorkorrekturfilter und der isolierte Gleichspannungswandler in einem einzigen Bauteil integriert sind.

Gemäß einer weiteren alternativen Ausführungsform kann es möglich sein, dass die isolierte Zwischenkreisspannung 60 Volt oder weniger entspricht.

Entsprechend einer weiteren alternativen Ausführungsform kann es möglich sein, dass wenigstens ein Filterelement enthalten ist.

Gemäß einer weiteren alternativen Ausführungsform kann es möglich sein, dass die Energiespeichereinheit in Form einer Akkumulators, insbesondere zur Versorgung einer Werkzeugmaschine mit elektrischer Energie, ausgestaltet ist.

Darüber hinaus wird die Aufgabe gelöst durch ein Verfahren zum Steuern und Regeln eines Systems enthaltend eine Ladevorrichtung und wenigstens eine erste und zweite Adaptervorrichtung zum jeweiligen Verbinden mit einer Energiespeichereinheit, wobei die Ladevorrichtung eine Netzstromanbindung zur Verbindung mit einer Netzstromquelle sowie eine Steuervorrichtung enthält, und wobei die wenigstens erster und zweiter Energiespeichereinheit jeweils einen Transceiver zum Senden und Empfangen von Signalen enthält.

Erfindungsgemäß enthält das Verfahren die Verfahrensschritte:
- Erzeugen einer isolierten Zwischenkreisspannung durch eine Vorregulierungsvorrichtung enthaltend einen isolierten Gleichspannungswandler und einen Kondensator;
- Verbinden der wenigstens ersten und/oder zweiten Adaptervorrichtung mit der Vorregulierungsvorrichtung, wobei jede Adaptervorrichtung eine Feinregulierungsvorrichtung mit einem geregelten und unisolierten Gleichspannungswandler enthält,
- Aussenden wenigstens eines Signals von der wenigstens ersten und/oder zweiten Adaptervorrichtung an die Steuervorrichtung; und
- Bereitstellen eines ersten Leistungswerts an der Schnittstelleneinrichtung einer ersten Adaptervorrichtung entsprechend dem von der Feinregulierungsvorrichtung empfangenen Signal und Bereitstellen eines zweiten Leistungswerts an der Schnittstelleneinrichtung einer zweiten Adaptervorrichtung entsprechend dem von der Feinregulierungsvorrichtung empfangenen Signal, wobei jeder Leistungswert wenigstens einem Anteil einer Gesamtleistung entspricht.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Ladevorrichtung gemäß einer beispielhaften Ausführungsform mit vier Schnittstelleneinrichtungen sowie drei Akkumulatoren, wobei an zwei Schnittstelleneinrichtungen jeweils eine Adaptervorrichtung positioniert ist und eine dritte Adaptervorrichtung entgegen der Pfeilrichtung A über einer dritten Schnittstelleneinrichtung positioniert ist;

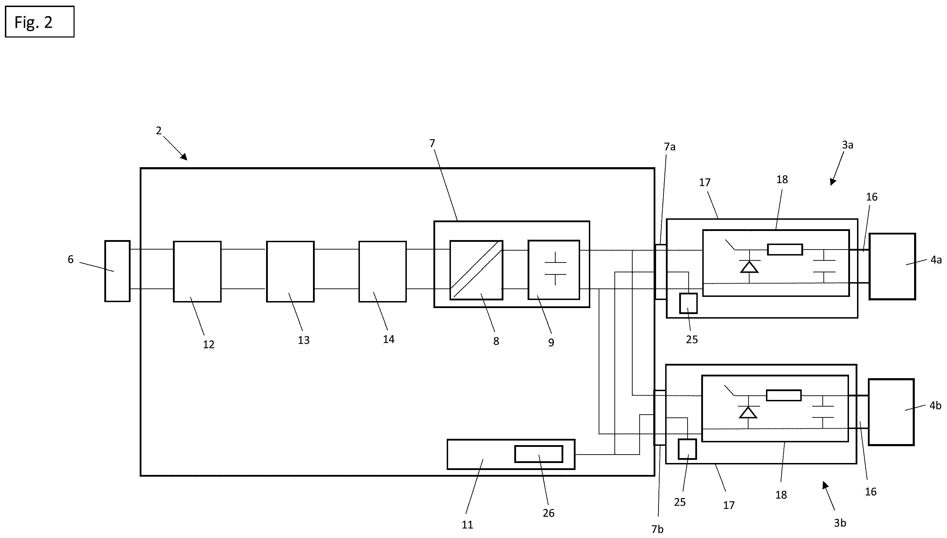

- Figur 2: einen Schaltplan des erfindungsgemäßen Gegenstands gemäß einer ersten Ausführungsform; und
- Figur 3: einen Schaltplan des erfindungsgemäßen Gegenstands gemäß einer zweiten Ausführungsform.

### Ausführungsbeispiele:

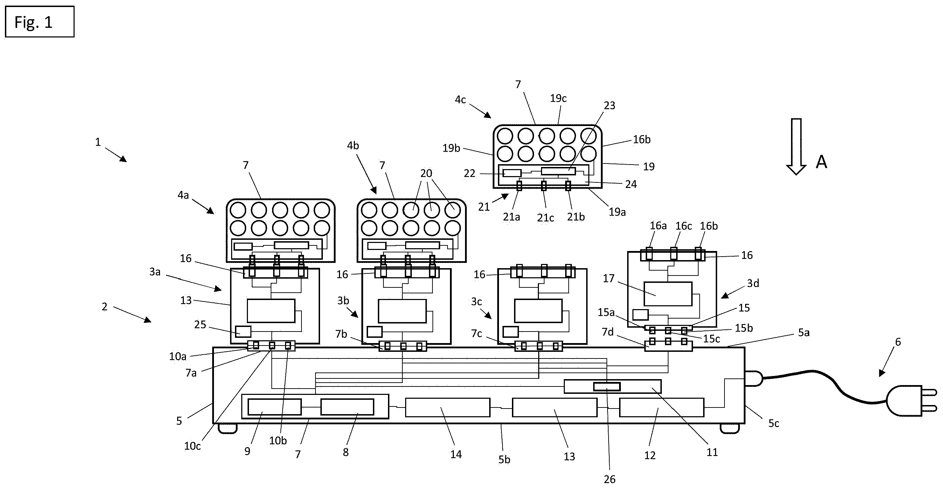

Figur 1 zeigt eine System 1 bestehend aus einer Ladevorrichtung 2, einer ersten, zweiten, dritten und vierte Adaptervorrichtungen 3a, 3b, 3c, 3d sowie einer ersten, zweiten und dritten Energiespeichereinheiten 4a, 4b, 4c.

In dem vorliegenden Ausführungsbeispiel sind die Energiespeichereinheiten 4a, 4b, 4c in Form von Akkumulatoren ausgestaltet. Die als Akkumulatoren ausgestaltenden Energiespeichereinheiten 4a, 4b, 4c können dabei beispielsweise zur Energieversorgung einer Werkzeugmaschine (d.h. ein Bohrhammer, eine Bohrmaschine, eine Säge, ein Schleifgerät oder dergleichen) dienen.

Eine Werkzeugmaschine ist in den Figuren nicht dargestellt.

Die Ladevorrichtung 2 gemäß einer ersten Ausführungsform enthält im Wesentlichen ein Ladergehäuse 5 sowie eine Netzstromanbindung 6 zur wiederlösbaren Verbindung mit einer Netzstromquelle. Die Netzstromquelle kann auch als Steckdose bezeichnet werden und ist in den Figuren nicht dargestellt.

Das Ladergehäuse 5 enthält dabei eine Oberseite 5a, eine Unterseite 5b und vier Seitenwände 5c.

Darüber hinaus enthält die Ladevorrichtung 2 eine Voreinstellungsvorrichtung 7 mit einem isolierten Gleichspannungswandler 8 und einem Kondensator 9 zum Erzeugen eines isolierten Zwischenkreis mit einer Zwischenkreisspannung. Die Voreinstellungsvorrichtung 7 enthält ferner eine erste, zweite, dritte und vierte Schnittstelle 7a, 7b, 7c, 7d.

Wie nachfolgend noch im Detail beschrieben wird an jeder Schnittstelle 7a, 7b, 7c, 7d ein Anteil der Gesamtleistung der Ladevorrichtung 3 bereitgestellt.

Entsprechend einem alternativen Ausführungsbeispiel kann die Voreinstellungsvorrichtung 7 auch mehr oder weniger als vier Schnittstellen 7a, 7b, 7c, 7d aufweisen.

Die Netzstromanbindung 6 ist in Form eines Stromkabels ausgestaltet und mit einer der Seitenwände 5c so verbunden, dass durch die Netzstromanbindung 6 elektrische Energie zu der Ladevorrichtung 2 gelangen kann. In dem vorliegenden Ausführungsbeispiel beträgt die elektrische Spannung der Netzstromquelle 230 Volt.

Gemäß einer alternativen Ausführungsform kann die Netzstromquelle auch weniger als 230 Volt (z.B. 120 Volt) bereitstellen.

Die Voreinstellungsvorrichtung 7 dient im Wesentlichen zum Reduzieren des Spannungswertes der Netzstromquelle von 230V auf einen Zwischenkreisspannungswert von weniger als oder gleich 60 Volt. Dabei enthält die Voreinstellungsvorrichtung 7 im Wesentlichen einen isolierten Gleichspannungswandler 8 und einen Kondensator 9. Entsprechend dem ersten Ausführungsbeispiel wird durch die Voreinstellungsvorrichtung 7 eine Zwischenkreisspannung mit 55 Volt erzeugt.

Des Weiteren enthält die Ladevorrichtung 2 gemäß der ersten Ausführungsform eine Steuervorrichtung 11, ein Filterelement 12, einen Gleichrichter 13 sowie einen Leistungsfaktorkorrekturfilter 14. Darüber hinaus enthält die Ladevorrichtung 2 einen Transceiver 26, der zum Senden und Empfangen von Informationen und Daten in Form von elektrischen Signalen dient.

Gemäß einer alternativen Ausführungsform enthält die Ladevorrichtung 2 kein Filterelement.

Die in Figur 1 gezeigte Ladevorrichtung 2 gemäß der ersten Ausführungsform weist einen Leistungsfaktorkorrekturfilter 14 als eigenständiges Bauteil auf, welches nicht Bestandteil der Voreinstellungsvorrichtung 7 ist.

In Figur 1 ist die Ladevorrichtung 2 mit einer ersten, zweiten, dritten und vierten Adaptervorrichtung 3a, 3b, 3c, 3d dargestellt. Die erste Adaptervorrichtung 3a ist dabei mit der ersten Schnittstelle 7a wiederlösbar verbunden und die zweite Adaptervorrichtung 3b ist mit der zweiten Schnittstelle 7b wiederlösbar verbunden. Die dritte Adaptervorrichtung 3c ist entgegen der Pfeilrichtung A über der dritten Schnittstelle 7c positioniert. Die vierte Adaptervorrichtung 3d ist nicht mit der Ladevorrichtung 2 und auch nicht mit einer Energiespeichereinheit verbunden. Zum tatsächlichen Verbinden einer Adaptervorrichtung 3a, 3b, 3c, 3d mit einer Schnittstelle 7a, 7b, 7c, 7d wird die Adaptervorrichtung 3a, 3b, 3c, 3d in Pfeilrichtung A auf die Schnittstelle 7a, 7b, 7c, 7d positioniert. Alternativ kann eine Adaptervorrichtung 3a, 3b, 3c, 3d auch fest (d.h. unlösbar) mit einer Schnittstelle 7a, 7b, 7c, 7d verbunden sein.

Die Adaptervorrichtung 3a, 3b, 3c, 3d enthält des Weiteren eine Adapterschnittstelle 15 zum wiederlösbaren Verbinden mit einer Schnittstelle 7a, 7b, 7c, 7d der Voreinstellungsvorrichtung 7.

Die Schnittstelle 7a, 7b, 7c, 7d enthält einen Pluskontakt 10a, einen Minuskontakt 10b und einen Kommunikationskontakt 10c. Die Adapterschnittstelle 15 enthält ebenfalls einen Pluskontakt 15a, einen Minuskontakt 15b und einen Kommunikationskontakt 15c. Der Pluskontakt 15a und Minuskontakt 15b der Adapterschnittstelle 15 können entsprechend mit dem Pluskontakt 10a und Minuskontakt 10b einer Schnittstelle 7a, 7b, 7c, 7d der Voreinstellungsvorrichtung 7 verbunden werden und dienen zum Erzeugen eines Stromkreises, sodass elektrische Energie von der Voreinstellungsvorrichtung 7 zu der Adaptervorrichtung 3a, 3b, 3c, 3d gelangen kann. Die Kommunikationskontakte 10c, 15c der Adaptervorrichtung 3a, 3b, 3c, 3d und der Voreinstellungsvorrichtung 7 können zum Erzeugen einer Kommunikationsverbindung miteinander verbunden werden, sodass Daten und Informationen in Form von elektrischen Signalen ausgetauscht werden können.

Die Adaptervorrichtung 3a, 3b, 3c, 3d enthält wiederum eine Schnittstelleneinrichtung 16 zum wiederlösbaren Verbinden mit einer Energiespeichereinheit 4a, 4b, 4c.

Jede Schnittstelleneinrichtung 16 enthält dabei einen einen Pluskontakt 16a, einen Minuskontakt 16b und einen Kommunikationskontakt 16c. Mit dem Pluskontakt 16a und Minuskontakt 16b kann ein Stromkreis geschlossen werden, wenn eine Energiespeichereinheit 4a, 4b, 4c mit der Schnittstellenrichtung 16 verbunden ist.

Darüber hinaus enthält die Adaptervorrichtung 3a, 3b, 3c, 3d eine Feinregulierungsvorrichtung 17 zum selektiven Einstellen eines Leistungswertes, sodass schließlich eine bestimmte Menge an elektrischer Energie an einer Schnittstelleneinrichtung 16 zum Laden einer Energiespeichereinheit bereitgestellt werden kann.

Die Feinregulierungsvorrichtung 17 enthält hierzu einen geregelten und unisolierten Gleichspannungswandler 18. Durch den geregelten und unisolierten Gleichspannungswandler 18 wird ein Spannungswert, welcher geringer ist als der Zwischenkreisspannungswert, erzeugt.

Die Adaptervorrichtung 3a, 3b, 3c, 3d enthält des Weiteren einen Transceiver 25, der zum Senden und Empfangen von Informationen und Daten in Form von elektrischen Signalen dient.

Die Steuervorrichtung 11 der Ladevorrichtung 2 dient im Wesentlichen zum Steuern und Regeln der verschiedenen Funktionen der Ladevorrichtung 2. Zu diesen Funktionen gehört unter anderem das Regeln des Zwischenkreisspannungswertes, des Stromstärkewerts und damit letztendlich der Leistungswerte an den jeweiligen Schnittstelleneinrichtungen 16.

Wie nachstehend noch in Detail beschrieben, regelt die Steuervorrichtung 11 die Verteilung bzw. die Aufteilung der Leistung aus dem Zwischenkreis auf mehrere Gleichspannungswandler 18, wenn mehr als eine Adaptervorrichtung 3a, 3b, 3c, 3d mit der Ladevorrichtung 2 verbunden ist und mehrere Energiespeichereinheiten 4a, 4b, 4c gleichzeitig durch die Ladevorrichtung 2 in einem Ladevorgang mit elektrischer Energie versorgt werden sollen.

Es ist beispielsweise möglich, dass zu jedem Zeitpunkt ein gleich großer Anteil (d.h. ein Viertel) der Zwischenkreisleistung an jeder Schnittstelleneinrichtung 16 bereitgestellt wird.

Die als Akkumulator ausgestaltete Energiespeichereinheit 4a, 4b, 4c kann beispielsweise mit der (nicht in Figuren gezeigten) Werkzeugmaschine wiederlösbar verbunden werden, um die Werkzeugmaschine mit elektrischer Energie zu versorgen.

Der Akkumulator 4a, 4b, 4c enthält im Wesentlichen ein Akku-Gehäuse 19, eine Anzahl an Energiespeicherzellen 20, eine Energiespeicher-Schnittstelle 21, einen Transceiver 22, eine Speichereinheit 23 sowie eine Steuerungseinrichtung 24.

Der Transceiver 22 einer Energiespeichereinheit 4a, 4b, 4c, der Transceiver 26 der Ladevorrichtung 2 und der Transceiver 25 einer Adaptervorrichtung 3a, 3b, 3c, 3d können jeweils so miteinander in Verbindung stehen, dass Informationen und Daten in Form von elektrischen Signalen untereinander ausgetauscht werden.

Die Energiespeicherzellen 20 können auch als Akku-Zellen bezeichnet werden und sind im Inneren des Akku-Gehäuses 19 angeordnet.

Das Akku-Gehäuse 19 enthält dabei im Wesentlichen ein Deckelelement 19a, vier Seitenwände 19b und ein Bodenelement 19c.

Die Energiespeicher-Schnittstelle 21 ist an der Außenseite des Deckelelements 19a angeordnet und dient zum elektrischen bzw. elektronischen sowie mechanischen Verbinden des Akkumulators 4a, 4b, 4c mit der Werkzeugmaschine oder der Ladevorrichtung 2. Die Energiespeicher-Schnittstelle 21 enthält dazu einen Pluskontakt 21a, einen Minuskontakt 21b und einen Kommunikationskontakt 21c. Mit dem Pluskontakt 21a und Minuskontakt 21b kann ein Stromkreis geschlossen werden, wenn die als Akkumulator ausgestaltete Energiespeichereinheit 4a, 4b, 4c mit der Schnittstellenrichtung 16 einer Adaptervorrichtung 3a, 3b, 3c, 3d verbunden ist.

Der Transceiver 22 kann auch als Sende- und Empfangseinheit oder Kommunikationseinrichtung bezeichnet werden und dient zum Senden sowie Empfangen von elektrischen Signalen, wodurch Daten und Informationen von bzw. zu dem Akkumulator 4a, 4b, 4c gesendet werden können.

Der Kommunikationskontakt 21c steht mit dem Transceiver 22 in Verbindung und dient zum Senden und Empfangen von Daten sowie Informationen in Form von elektrischen Signalen. Der Transceiver 22 ist wiederum mit der Steuerungseinrichtung 24 verbunden.

Alternativ oder zusätzlich kann der Transceiver 22 auch als drahtlose Funkkommunikationseinrichtung (z.B. basierend auf einer Bluetooth-Technologie) ausgestaltet sein.

Die Energiespeicherzellen 20 dienen zum Aufnehmen, Speichern und erneuten Abgeben elektrischer Energie. Die Energiespeicherzellen 20 sind in zylindrischer Form sowie auf Basis einer Lithium-Ionen-Technologie ausgestaltet. Jede Energiespeicherzelle 20 enthält an einem Ende eine Kontakteinrichtung, die zur Übertragung elektrischer Energie dient. Die einzelnen Kontakteinrichtung sind über entsprechende Leitungen mit der Steuerungseinrichtung 24 des Akkumulators 4a, 4b, 4c verbunden.

Alternativ können die Energiespeicherzellen 20 auch auf einer anderen geeigneten Technologie basieren.

Die zylindrische Form der Energiespeicherzellen 20 ist ebenfalls optional, sodass auch jede andere geeignete Form bzw. Geometrie gewählt werden kann. So ist es insbesondere auch möglich, dass die Energiespeicherzellen 20 als Pouchzellen ausgestaltet sind.

Es ist zudem auch möglich, dass der Akkumulator 4a, 4b, 4c sowohl zylindrische Energiespeicherzellen 20 als auch Pouch-Zellen enthält. Es ist insbesondere möglich, dass der Akkumulator 4a, 4b, 4c lediglich eine einzige zylindrische Energiespeicherzelle 20 und eine einzige Pouchzelle enthält.

Die Steuerungseinrichtung 24 regelt und steuert verschiedene Funktionen des Akkumulators 4a, 4b, 4c. Zu den Funktion gehört unter anderen die Steuerung der Aufnahme und Abgabe von elektrischer Energie in bzw. aus den Energiespeicherzellen 20. Darüber hinaus wird mit Hilfe der Steuerungseinrichtung 24 die Menge an elektrischer Energie gesteuert, die von den Energiespeicherzellen 20 aufgenommen oder abgegeben werden sollen.

Die Speichereinheit 23 steht in Verbindung mit der Steuerungseinrichtung 24 und dient zum Speichern sowie Bereitstellen von Daten und Informationen. Zu den Daten und Informationen gehören unter anderen Schwellwerte für die Spannung und Stromstärke für einen Lade- und Entladevorgang der Energiespeichereinheit 4a, 4b, 4c.

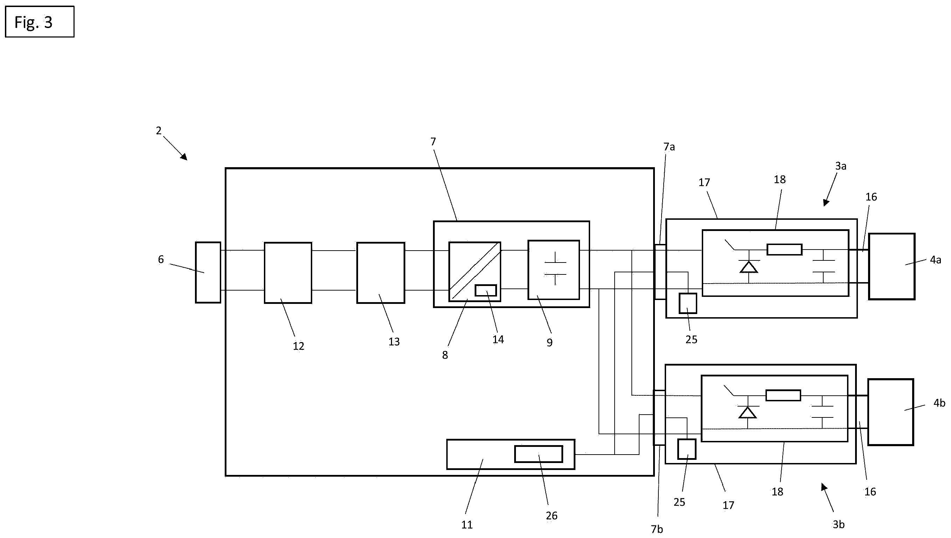

In Figur 3 ist eine Schaltplan einer Ladevorrichtung 2 gemäß einer zweiten Ausführungsform gezeigt, bei der der Leistungsfaktorkorrekturfilter 14 kein eigenständiges Bauteil ist, sondern zusammen mit dem isolierten Gleichspannungswandler 18 in einem einzigen Bauteil ausgeformt ist. Hierdurch ist der Leistungsfaktorkorrekturfilter 14 ein Bestandteil der Voreinstellungsvorrichtung.

Zur Ausführung des erfindungsgemäßen Verfahrens wird zunächst eine isolierter Zwischenkreis durch den isolierten Gleichspannungswandler 18 und den Kondensator erzeugt. In dem vorliegenden Ausführungsbeispiel beträgt dabei die Zwischenkreisspannung 60 Volt.

Die erste Adaptervorrichtung 3a wird so mit der ersten Schnittstelle 7a der Voreinstellungsvorrichtung 7 verbunden, dass der Pluskontakt 15a und Minuskontakt 15b der ersten Adapterschnittstelle 15 mit dem entsprechenden Pluskontakt 10a und Minuskontakt 10b der ersten Schnittstelle. Durch die Verbindung der Plus- und Minuskontakte wird ein Stromkreis geschlossen, sodass elektrische Energie von der Voreinstellungsvorrichtung 7 bzw. dem Zwischenkreis der Voreinstellungsvorrichtung 7 zu der ersten Adaptervorrichtung 3a gelangen kann.

Ebenso wird eine zweite Adaptervorrichtung 3b mit der zweiten Schnittstelle 7b der Voreinstellungsvorrichtung 7 verbunden, sodass der Pluskontakt 15a und Minuskontakt 15b der zweiten Adapterschnittstelle 15 mit dem entsprechenden Pluskontakt 10a und Minuskontakt 10b der zweiten Schnittstelle 7b. Durch die Verbindung der Plus- und Minuskontakte wird ein Stromkreis geschlossen, sodass elektrische Energie von der Voreinstellungsvorrichtung 7 bzw. dem Zwischenkreis der Voreinstellungsvorrichtung 7 zu der zweiten Adaptervorrichtung 3b gelangen kann.

Anschließend wird eine erste als Akkumulator ausgestaltete Energiespeichereinheit 4a mit der ersten Adaptervorrichtung 3a verbunden. Durch die Verbindung stehen der Pluskontakt, Minuskontakt und Kommunikationskontakt der ersten Energiespeichereinheit 4a mit dem entsprechenden Pluskontakt 15a, Minuskontakt 15b und Kommunikationskontakt 15c der ersten Adapterschnittstelle 15 miteinander so in Kontakt, dass zum einen ein Stromkreis zur Übertragung elektrischer Energie von der ersten Adaptervorrichtung 3a an die erste Energiespeichereinheit 4a geschlossen wird. Zum anderen sendet die erste Energiespeichereinheit Signale mit Daten und Informationen über die Ladeparameter mit Hilfe der entsprechenden Kommunikationskontakte 15c, 21c an die erste Adaptervorrichtung 3a. Die Signale mit den Ladeparametem der ersten Energiespeichereinheit 4a gelangt an die Steuervorrichtung 11 der Ladevorrichtung 2. Die Steuervorrichtung 11 steht mit der ersten Adaptervorrichtung 3a in Verbindung, sodass ein bestimmter Leistungswert durch die Feinregulierungsvorrichtung 17 bzw. den Gleichspannungswandler 18 der ersten Adaptervorrichtung 3a für den Ladevorgang der ersten Energiespeichereinheit 4a eingestellt wird. Der für den Ladevorgang der ersten Energiespeichereinheit 4a eingestellte erste Leistungswert entspricht den Signalen, welche von der ersten Energiespeichereinheit 4a an die Ladevorrichtung 2 gesendet wurden. Der erste Leistungswert entspricht dabei einem Anteil der Gesamtleistung.

Des Weiteren wird eine zweite Energiespeichereinheit 4b mit der zweiten Adaptervorrichtung 3b verbunden. Durch die Verbindung stehen der Pluskontakt 21a, Minuskontakt 21b und Kommunikationskontakt 21c der zweiten Energiespeichereinheit 4b mit dem entsprechenden Pluskontakt 15a, Minuskontakt 15b und Kommunikationskontakt 15c der zweiten Adapterschnittstelle 15 miteinander so in Kontakt, dass zum einen ein Stromkreis zur Übertragung elektrischer Energie von der zweiten Adaptervorrichtung 3b an die zweite Energiespeichereinheit 4b geschlossen wird. Zum anderen sendet die zweite Energiespeichereinheit 4b Signale mit Daten und Informationen über die Ladeparameter mit Hilfe der entsprechenden Kommunikationskontakte 15c, 21c an die zweite Adaptervorrichtung 3b. Die Signale mit den Ladeparametern der zweiten Energiespeichereinheit 4b gelangt an die Steuervorrichtung 11 der Ladevorrichtung 2. Die Steuervorrichtung 11 steht mit der zweiten Adaptervorrichtung 3b in Verbindung, sodass ein bestimmter Leistungswert durch die Feinregulierungsvorrichtung 17 bzw. den Gleichspannungswandler 18 der zweiten Adaptervorrichtung 3b für den Ladevorgang der zweiten Energiespeichereinheit eingestellt wird. Der für den Ladevorgang der zweiten Energiespeichereinheit 4b eingestellte zweite Leistungswert entspricht den Signalen, welche von der zweiten Energiespeichereinheit 4b an die Ladevorrichtung 2 gesendet wurden. Der zweite Leistungswert entspricht dabei einem Anteil der Gesamtleistung.

### Bezugszeichen

- 1: System
- 2: Ladevorrichtung
- 3a: erste Adaptervorrichtung
- 3b: zweite Adaptervorrichtung
- 3c: dritte Adaptervorrichtung
- 3d: vierte Adaptervorrichtung
- 4a: erste Energiespeichereinheit
- 4b: zweite Energiespeichereinheit
- 4c: dritte Energiespeichereinheit
- 5: Ladergehäuse
- 5a: Oberseite des Ladegehäuses
- 5b: Unterseite des Ladegehäuses
- 5c: Seitenwand des Ladegehäuses
- 6: Netzstromanbindung
- 7: Voreinstellungsvorrichtung
- 7a: erste Schnittstelle der Voreinstellungsvorrichtung
- 7b: zweite Schnittstelle der Voreinstellungsvorrichtung
- 7c: dritte Schnittstelle der Voreinstellungsvorrichtung
- 7d: vierte Schnittstelle der Voreinstellungsvorrichtung
- 8: isolierten Gleichspannungswandler
- 9: Kondensator
- 10a: Pluskontakt einer Schnittstelle der Voreinstellungsvorrichtung
- 10b: Minuskontakt einer Schnittstelle der Voreinstellungsvorrichtung
- 10c: Kommunikationskontakt einer Schnittstelle der Voreinstellungsvorrichtung
- 11: Steuervorrichtung
- 12: Filterelement
- 13: Gleichrichter
- 14: Leistungsfaktorkorrekturfilter
- 15: Adapterschnittstelle
- 15a: Pluskontakt der Adapterschnittstelle
- 15b: Minuskontakt der Adapterschnittstelle
- 15c: Kommunikationskontakt der Adapterschnittstelle
- 16: Schnittstelleneinrichtung
- 16a: Pluskontakt der Schnittstelleneinrichtung
- 16b: Minuskontakt der Schnittstelleneinrichtung
- 16c: Kommunikationskontakt der Schnittstelleneinrichtung
- 17: Feinregulierungsvorrichtung
- 18: unisolierten Gleichspannungswandler
- 19: Akku-Gehäuse
- 19a: Deckelelement des Akku-Gehäuses
- 19b: Seitenwand des Akku-Gehäuses
- 19c: Bodenelement des Akku-Gehäuses
- 20: Energiespeicherzelle
- 21: Energiespeicher-Schnittstelle
- 21a: Pluskontakt der Energiespeicher-Schnittstelle
- 21b: Minuskontakt der Energiespeicher-Schnittstelle
- 21c: Kommunikationskontakt der Energiespeicher-Schnittstelle
- 22: Transceiver der Energiespeichereinheit
- 23: Speichereinheit
- 24: Steuerungseinrichtung
- 25: Transceiver der Adaptervorrichtung
- 26: Transceiver der Ladevorrichtung

## Patentansprüche

1. Ladevorrichtung (2), insbesondere zum Versorgen wenigstens einer ersten und zweiten Energiespeichereinheit (4a, 4b, 4c) mit elektrischer Energie, enthaltend eine Netzstromanbindung (6) zur Verbindung mit einer Netzstromquelle sowie eine Steuervorrichtung (11),
**gekennzeichnet durch**
- einen Gleichrichter (13);
- einen Leistungsfaktorkorrekturfilter (14);
- eine Voreinstellungsvorrichtung (7) mit einen isolierten Gleichspannungswandler (8) und Kondensator (9) zum Erzeugen einer isolierten Zwischenkreisspannung, wobei die Voreinstellungsvorrichtung (7) wenigstens eine erste und zweite Schnittstelle (7a, 7b, 7c, 7d) enthält, sowie
- wenigstens eine erste und zweite Adaptervorrichtung (3a, 3b, 3c, 3d), wobei jede Adaptervorrichtung (3a, 3b, 3c, 3d) eine Adapterschnittstelle (15) enthält zum Verbinden mit der wenigstens ersten oder zweiten Schnittstelle (7a, 7b, 7c, 7d) der Voreinstellungsvorrichtung (7), und wobei jede Adaptervorrichtung eine Feinregulierungsvorrichtung (17) mit einer Schnittstelleneinrichtung (16) zum Verbinden mit einer Energiespeichereinheit (4a, 4b, 4c) enthält, und wobei jede Feinregulierungsvorrichtung (17) einen geregelten und unisolierten Gleichspannungswandler (18) enthält, sodass ein Leistungswert an der ersten und/oder zweiten Schnittstelleneinrichtung (16) bereitstellbar ist, und wobei der Leistungswert an der ersten und/oder zweiten Schnittstelleneinrichtung (16) wenigstens einem Anteil einer Gesamtleistung entspricht.

2. Ladevorrichtung (2) nach Anspruch 1,
**dadurch gekennzeichnet, dass** jede Adaptervorrichtung (3a, 3b, 3c, 3d) wenigstens einen Transceiver (25) enthält, sodass wenigstens ein Signal von der Adaptervorrichtung (3a, 3b, 3c, 3d) an die Steuervorrichtung (11) gesendet werden kann zum Einstellen eines Spannungswertes an einer Schnittstelleneinrichtung (16).

3. Ladevorrichtung (2) nach Anspruch 1 oder 2,
**dadurch gekennzeichnet, dass** die Voreinstellungsvorrichtung (7) wenigstens einen Leistungsfaktorkorrekturfilter (14) enthält.

4. Ladevorrichtung (2) nach wenigstens einem der Ansprüche 1 bis 3,
**dadurch gekennzeichnet, dass** der Leistungsfaktorkorrekturfilter (14) und der isolierte Gleichspannungswandler (8) in einem einzigen Bauteil integriert sind.

5. Ladevorrichtung (2) nach wenigstens einem der Ansprüche 1 bis 4,
**dadurch gekennzeichnet, dass** die isolierte Zwischenkreisspannung 60 Volt oder weniger entspricht.

6. Ladevorrichtung (2) nach wenigstens einem der Ansprüche 1 bis 5,
**dadurch gekennzeichnet, dass** wenigstens ein Filterelement (12) enthalten ist.

7. Ladevorrichtung (2) nach wenigstens einem der Ansprüche 1 bis 6,
**dadurch gekennzeichnet, dass** die Energiespeichereinheit (4a, 4b, 4c) in Form einer Akkumulators, insbesondere zur Versorgung einer Werkzeugmaschine mit elektrischer Energie, ausgestaltet ist.

8. Verfahren zum Steuern und Regeln eines Systems (1) enthaltend eine Ladevorrichtung (2) und wenigstens eine erste und zweite Adaptervorrichtung (3a, 3b, 3c, 3d) zum jeweiligen Verbinden mit einer Energiespeichereinheit (4a, 4b, 4c), wobei die Ladevorrichtung (2) eine Netzstromanbindung (6) zur Verbindung mit einer Netzstromquelle sowie eine Steuervorrichtung (11) enthält, und wobei die wenigstens erster und zweiter Energiespeichereinheit (4a, 4b, 4c) jeweils einen Transceiver (22) zum Senden und Empfangen von Signalen enthält,
**gekennzeichnet durch** die Verfahrensschritte:
- Erzeugen einer isolierten Zwischenkreisspannung durch eine Vorregulierungsvorrichtung (7) enthaltend einen isolierten Gleichspannungswandler (8) und einen Kondensator (9);
- Verbinden der wenigstens ersten und/oder zweiten Adaptervorrichtung (3a, 3b, 3c, 3d) mit der Vorregulierungsvorrichtung (7), wobei jede Adaptervorrichtung (3a, 3b, 3c, 3d) eine Feinregulierungsvorrichtung (17) mit einem geregelten und unisolierten Gleichspannungswandler (18) enthält,
- Aussenden wenigstens eines Signals von der wenigstens ersten und/oder zweiten Adaptervorrichtung (3a, 3b, 3c, 3d) an die Steuervorrichtung (11); und
- Bereitstellen eines ersten Leistungswerts an der Schnittstelleneinrichtung (16) einer ersten Adaptervorrichtung (3a, 3b, 3c, 3d) entsprechend dem von der Feinregulierungsvorrichtung (17) empfangenen Signal und Bereitstellen eines zweiten Leistungswerts an der Schnittstelleneinrichtung (16) einer zweiten Adaptervorrichtung (3a, 3b, 3c, 3d) entsprechend dem von der Feinregulierungsvorrichtung (17) empfangenen Signal, wobei jeder Leistungswert wenigstens einem Anteil einer Gesamtleistung entspricht.
